# EUROPÄISCHE PATENTSCHRIFT

(11) **EP 0 507 058 B1**
(45) Veröffentlichungstag und Bekanntmachung des Hinweises auf die Patenterteilung: **09.08.1995**
(21) Anmeldenummer: 92101908.9
(22) Anmeldetag: 05.02.1992
(51) Int. Cl.: G01M 13/02, G01M 17/02

(54) **Einrichtung zum Prüfen der an Fahrzeugrädern angreifenden Drehantriebsverbindung unter betriebsähnlichen Belastungsbedingungen**
Device for testing vehicle wheel-drive transmitting elements under operative load conditions
Dispositif d'essai des éléments de transmission de rotation à une roue de véhicule sous des charges simulant les conditions d'utilisation normales

(30) Priorität: 05.04.1991 DE 4111057
(43) Veröffentlichungstag der Anmeldung: 07.10.1992
(73) Patentinhaber: FRAUNHOFER-GESELLSCHAFT ZUR FÖRDERUNG DER ANGEWANDTEN FORSCHUNG E.V., 80636 München (DE)
(72) Erfinder: Fischer, Gerhard, Dr. Ing., W-6100 Darmstadt (DE); Grubisic, Vatroslav, Prof. Dr. Ing., W-6107 Rheinheim 4 (DE)
(74) Vertreter: Kraus, Walter, Dr.

(56) Entgegenhaltungen:
- EP-A- 0 147 595
- DE-U- 8 907 621
- TECHNISCHE RUNDSCHAU, Bd. 80, Nr. 45, 4. November 1988, Bern, CH, Seiten 46-49, E.K. ASCHMONEIT: "Laborfahrten als Belastungstest von Autoradsystemen"

## Beschreibung

Die Erfindung betrifft eine Einrichtung zum Prüfen der an Fahrzeugrädern angreifenden Drehantriebsverbindung unter betriebsähnlichen Belastungsbedingungen, umfassend:
(a) eine Halterungseinrichtung zum drehbaren Befestigen eines Fahrzeugrads, die eine Radachse umfaßt, welche auf ihrer einen Seite drehfest an einem Träger angebracht und dazu geeignet ist, auf ihrer anderen Seite das Fahrzeugrad über dessen Radlager drehbar zu halten;
(b) eine derart um das Fahrzeugrad herum angeordnete Trommel, daß das Fahrzeugrad an der inneren Umfangsoberfläche der Trommel anbringbar ist oder über einen auf dem Fahrzeugrad befindlichen Reifen in Rolleingriff mit der inneren Umfangsoberfläche der Trommel bringbar ist; und
(c) eine Trommeldreheinrichtung zum Drehen der Trommel;

Eine Einrichtung der vorstehenden Art ist aus der auf die Erfinder der vorliegenden Erfindung zurückgehenden europäischen Patentschrift 0 063 245 und der dieser entsprechenden US-Patentschrift 4 475 383 bekannt. Zwar ist diese Einrichtung zur Prüfung von Fahrzeugrädern, Radnaben, Radlagern und Radschrauben unter betriebsähnlichen Belastungsbedingungen sehr gut geeignet, wobei auch Bremskräfte über eine im Fahrzeugrad eingebaute Trommel- oder Scheibenbremse im Fahrzeugrad erzeugt werden können. Jedoch ist diese bekannte Einrichtung in der Form, wie sie in den vorgenannten Druckschriften beschrieben und dargestellt ist, nicht dazu geeignet, die an den Fahrzeugrädern angreifende Drehantriebsverbindung, worunter auch Teile dieser Drehantriebsverbindung verstanden werden sollen, wie beispielsweise die Verbindungsvorrichtung zwischen der Antriebswelle und dem Fahrzeugrad, sowie ein zwischen der Antriebswelle und dem Fahrzeugrad vorgesehenes Gelenk und/oder die Antriebswelle selbst, unter betriebsähnlichen Belastungsbedingungen zu prüfen.

Eine Prüfung der an Fahrzeugrädern angreifenden Drehantriebsverbindung unter betriebsähnlichen Belastungsbedingungen ist jedoch von großer Wichtigkeit für die Sicherheit von Kraftfahrzeugen, und zwar sowohl von Personenkraftfahrzeugen wie auch von Nutzlastkraftfahrzeugen, und für die Auslegung solcher Drehantriebsverbindungen.

In dieser Hinsicht ist es insbesondere wichtig, daß die Rad-Naben-Baugruppe von Antriebsachsen von Kraftfahrzeugen über eine Zentralmutter verspannt wird, und daß das Festigkeitsverhalten dieser gesamten Rad-Naben-Baugruppe stark vom Verspannungszustand, der mittels der Zentralmutter erzeugt wird, abhängt. Bei einem Nachlassen der Vorspannung der Zentralmutter tritt eine Erhöhung der Beanspruchung und eine Beeinträchtigung der Funktion der Rad-Naben-Baugruppe auf, was zu einem Totalausfall dieser Rad-Naben-Baugruppe führen kann. Ein solches gefährliches Nachlassen der Vorspannung der Zentralmutter kann durch die verschiedensten Beanspruchungen bewirkt werden, welchen die mittels der Zentralmutter verspannte Verbindung zwischen der Antriebsachse und dem Fahrzeugrad durch die Radkräfte ausgesetzt ist, wobei es sich bei diesen Radkräften sowohl um die senkrechte Kraft und die Seitenkraft als auch um überlagerte Torsionsmomente der Antriebswelle handelt, die durch Antriebskräfte aufgrund des Anfahrens und des Schaltens und durch Bremskräfte aufgrund der Motorbremsung o.dgl. bewirkt werden.

Das Interesse zum Prüfen der Drehantriebsverbindung an Fahrzeugrädern erstreckt sich aus den vorgenannten Gründen nicht nur auf die unmittelbare Verbindung zwischen der Antriebswelle und dem Fahrzeugrad mittels der Zentralmutter und der zugehörigen Verzahnung, mit welcher die zu verbindenden Teile ineinandergreifen, sondern auch auf die weiteren Glieder der Drehantriebsverbindung, wie zwischengefügte Gelenke, die Antriebswelle selbst, sowie deren Lagerung etc.

Aus dem Dokument DE-U-89 07 621 ist eine Einrichtung zum Prüfen von Fahrzeugrädern bekannt, umfassend eine Halterungseinrichtung zum drehbaren Befestigen eines Fahrzeugrads, die eine Radachse umfaßt, welche drehfest an einem Träger angebracht und dazu geeignet ist, das Fahrzeugrad über dessen Radlager drehbar zu halten; eine derart um das Fahrzeugrad herum angeordnete Trommel, daß das Fahrzeugrad an der inneren Umfangsoberfläche der Trommel fest anbringbar ist; und eine Trommeldreheinrichtung zum Drehen der Trommel. Eine Brems- oder Antriebswelle ist drehfest an dem Fahrzeugrad anbringbar und mit einer zum Antreiben oder Bremsen des Fahrzeugrads relativ zu dem Trommeldrehmoment vorgesehenen Antriebseinrichtung verbunden, die auch als Brems- oder Belastungseinheit umschaltbar ist. Die Brems- oder Antriebswelle ist frei geführt, wobei das Fahrzeugrad durch eine achsseitige Halterung gehalten ist, die aus starren Aufnahmen und Führungslenkern für den Radträger besteht. Radial- und Axialbelastungen werden in der Einrichtung nach DE-U-89 07 621 bei starr gehaltenem Fahrzeugrad über die Trommel eingebracht.

Aufgabe der Erfindung ist es, eine Erfindung zum Prüfen der an Fahrzeugrädern angreifenden Drehantriebsverbindung unter betriebsähnlichen Belastungsbedingungen zur Verfügung zustellen, die es ermöglicht, die Wirkungen der Beanspruchung der Drehantriebsverbindung, worunter, wie schon gesagt, auch Teile derselben verstanden werden sollen, durch Radkräfte festzustellen, um so entsprechende Kriterien für die Sicherheit vorhandener und die Auslegung neuer Drehantriebsverbindungen zu erhalten.

Diese Aufgabe wird mit einer Einrichtung der eingangs genannten, gattungsgemäßen Art erfindungsgemäß dadurch gelöst, daß eine Brems- und/oder Antriebswelle auf ihrer einen Seite drehfest an dem Fahrzeugrad anbringbar und auf ihrer anderen Seite mit einer zum Bremsen oder Antreiben des Fahrzeugrads relativ zu dem Trommeldrehmoment vorgesehenen Brems- und/oder Antriebsvorrichtung verbunden ist, wobei die Brems- und/oder Antriebswelle drehbar durch die Radachse hindurchführbar ist, und wobei die zu prüfende Drehantriebsverbindung die Brems- und/oder Antriebswelle umfaßt oder durch diese mit dem Fahrzeugrad verbindbar oder mit der Brems- und/oder Antriebsvorrichtung verbunden ist, wobei ferner mit der Halterungseinrichtung
(1) eine Radialbelastungseinrichtung zum Aufbringen einer in der Radialrichtung des Fahrzeugrads wirkenden Radialkraft auf die Halterungseinrichtung und/oder
(2) eine Axialbelastungseinrichtung zum Aufbringen einer in der Axialrichtung des Fahrzeugrads wirkenden Axialkraft auf die Halterungseinrichtung

verbunden ist, so daß auf diese Weise alle nur denkbaren und möglichen Radkräfte, die in der Fahrpraxis unter normalen und extremen Bedingungen auftreten, in ihrer Wirkung auf die Drehantriebsverbindung des Fahrzeugrads untersucht werden können.

Diese Einrichtung nach der Erfindung ermöglicht es, die beim Anfahren, Beschleunigen, Schalten, Bremsen und/oder Stoppen eines Kraftfahrzeugs auftretenden Torsionsmomente in ihrer Einwirkung auf die Drehantriebsverbindung des Fahrzeugrads zu simulieren und dadurch äußerst zuverlässige Sicherheits- und Auslegungskriterien für derartige Drehantriebsverbindungen zu erhalten.

Insbesondere kann die Brems- und/oder Antriebswelle eine Original-Antriebswelle eines Kraftfahrzeugs sein, die mit dem Kraftfahrzeugrad durch die Original-Zentralmutter-Verspannungsvorrichtung verbunden ist. Auch die Radachse kann eine Original-Kraftfahrzeugachse sein. Auf diese Weise ist es möglich, die in den Kraftfahrzeugen eingebauten Originalteile der an den Fahr zeugrädern angreifenden Drehantriebsverbindung unter allen in der Fahrpraxis auftretenden Bedingungen, insbesondere unter den starke Beanspruchungen bewirkenden Extrembedingungen, zu prüfen.

Zwar kann die Brems- und/oder Antriebseinrichtung grundsätzlich auch der Motor und das Getriebe eines Kraftfahrzeugs sein. Jedoch ergibt sich eine aufbaumäßig besonders günstige und trotzdem außerordentlich vielseitig wirksame Einrichtung, wenn erfindungsgemäß eine Bremsvorrichtung an die Brems- und/oder Antriebswelle angekoppelt ist, die vorzugsweise als Scheibenbremse ausgebildet ist. Besonders zu bevorzugen ist es, daß diese Bremsvorrichtung als in beiden Drehrichtungen wirkende Doppelbremse ausgebildet ist. Auf diese Weise lassen sich sowohl die Antriebs- als auch die Motorbremsmomente durch Drehrichtungsumkehr der Drehung der Trommel, welche das Fahrzeug antreibt, hervorragend simulieren.

Im einzelnen kann die Einrichtung so ausgebildet sein, daß die durch die Radialbelastungseinrichtung aufbringbare Radialkraft und die durch die Axialbelastungseinrichtung aufbringbare Axialkraft unabhängig voneinander einstellbar sind. Weiterhin kann die Radialbelastungseinrichtung und/oder die Axialbelastungseinrichtung jeweils ein servohydraulischer Zylinder sein.

Außerdem kann auf der inneren Umfangsoberfläche der Trommel wenigstens ein Anlaufring benachbart dem Reifen und der einen Flanke des Fahrzeugsrads angeordnet und auf der dem Reifen zugewandten Seite abgeschrägt sein. Vorzugsweise ist benachbart jeder Flanke des Fahrzeugrads je ein auf seiner dem Reifen zugewandten Seite abgeschrägter Anlaufring vorgesehen.

Weiterhin ist die Trommel vorzugsweise so ausgebildet, daß deren Innendurchmesser gleich dem Reifen- oder Raddurchmesser oder geringfügig größer als der Reifendurchmesser des unbelasteten Reifens ist.

Zur Übertragung der Meßwerte von der Antriebswelle kann an der Brems- und/oder Antriebswelle eine Meßwertübertragungseinrichtung angebracht sein. Diese Meßwertübertragungseinrichtung kann mit einer an der Brems- und/oder Antriebswelle vorgesehenen Torsionsmomentgebereinrichtung, beispielsweise mit Dehnungsmeßstreifen, verbunden sein. Insbesondere kann die Meßwertübertragungseinrichtung eine Schleifring-Meßwertübertragungseinrichtung sein.

Um die betriebsähnlichen Belastungsbedingungen automatisch über eine lange Zeit hinweg, beispielsweise mehrere tausend Stunden, auf das Fahrzeugrad mit der Drehantriebsverbindung einwirken zu lassen, kann die Brems- und/oder Antriebsvorrichtung zum Simulieren betriebsähnlicher Brems-, Beschleunigungs-, Schalt-, Anfahr- und/oder Stopbelastungen als programmgesteuerte Brems- und/oder Antriebsvorrichtung ausgebildet sein.

Auch die Trommeldreheinrichtung kann zum zusammenwirkenden Simulieren betriebsähnlicher Brems-, Beschleunigungs-, Schalt-, Anfahr- und/oder Stopbelastungen mit der Brems- und/oder Antriebsvorrichtung als programmgesteuerte Trommeldreheinrichtung ausgebildet sein.

Schließlich kann auch die Radialbelastungseinrichtung und/oder die Axialbelastungseinrichtung zum Simulieren betriebsähnlicher Belastungen, bei denen senkrechte Kräfte und/oder Radialkräfte auftreten, im Zusammenwirken mit der Brems- und/oder Antriebsvorrichtung und/oder im Zusammenwirken mit der Trommeldreheinrichtung als programmgesteuerte Einrichtung ausgebildet sein.

Die vorstehenden sowie weitere Vorteile und Merkmale der Erfindung werden nachstehend anhand einer in den Figuren 1 bis 3 der Zeichnung dargestellten, besonders bevorzugten Ausführungsform einer erfindungsgemäßen Einrichtung näher beschrieben und erläutert; es zeigen:
- Figur 1: eine Gesamtdarstellung einer Ausführungsform der erfindungsgemäßen Einrichtung zum Simulieren von Antriebs- und Bremsmomenten zusätzlich zu senkrechten Kräften und Seitenkräften und zum Untersuchen von deren Auswirkungen auf eine Drehantriebsverbindung, die an einem Fahrzeugrad angreift;
- Figur 2: eine Teilansicht der Einrichtung nach Figur 1, welche die Verbindung des Fahrzeugrads über eine Brems- und/oder Antriebswelle mit einer Bremseinrichtung zum Simulieren von Antriebs- und Motorbremsmomenten veranschaulicht; und
- Figur 3: eine praktische Ausführungsform der erfindungsgemäßen Einrichtung nach den Figuren 1 und 2, aus der insbesondere die Mitverschwenkbarkeit der Brems- und/oder Antriebsvorrichtung mit der Halterungseinrichtung (Belastungsbügel) ersichtlich ist.

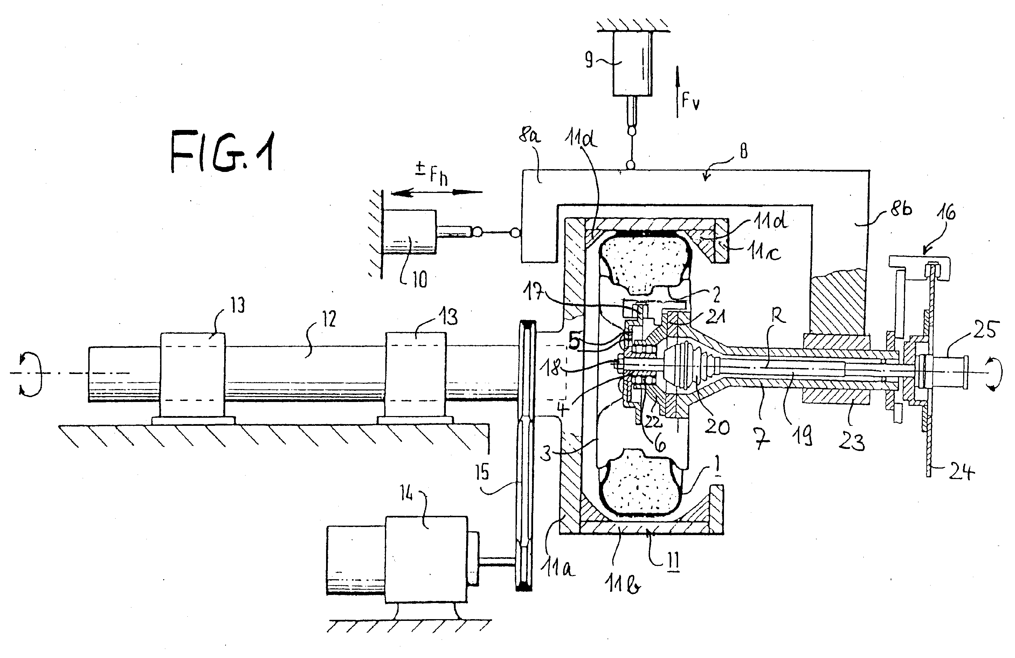

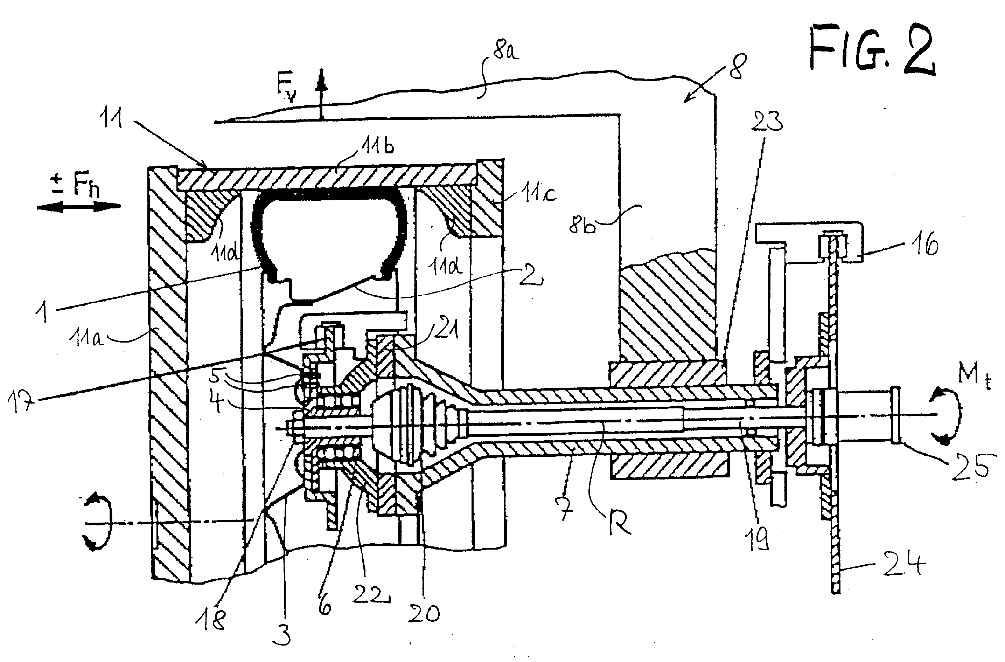

Die Ausführungsform gemäß den Figuren 1 bis 3 weist folgendes auf: Einen Reifen 1, der auf der Felge 2 eines aus letzterer und einer Radschüssel 3 bestehenden Rades 2, 3 montiert und mit Nennluftdruck oder erhöhtem Luftdruck aufgepumpt ist. Zur Befestigung des Fahrzeugrads 1, 2 dient eine Radnabe 4. Bei dieser Radnabe 4 handelt es sich um eine Originalnabe mit der zugehörigen Original-Fahrzeuglagerung. Zur Befestigung des Fahrzeugrads 1, 2, 3 an der Radnabe 4 dienen Radschrauben 5. Die Übertragung der eingeleiteten quasistatischen Kräfte in das sich drehende Fahrzeugrad 1, 2, 3 erfolgt mittels eines Radlagers 6 und eines Achsrohrs 7. Bei der Prüfung können bevorzugt die Originalradlager sowie die Originalachsschenkel eingebaut werden.

Weiterhin weist die Einrichtung gemäß den Figuren 1 bis 3 einen Belastungsbügel 8 auf, der zusammen mit dem Achsrohr 7 eine Halterungseinrichtung zum drehbaren Befestigen des Fahrzeugrads 2, 3 bildet. Über diesen Belastungsbügel 8, das Achsrohr 7, das Radlager 6, die Radnabe 4 und die Radschrauben 5 werden eine Radialkraft und eine Axialkraft in die Radschüssel 3 eingeleitet, und zwar so, daß die am Reifen 1 entstehenden Reaktionskräfte in einem definierten Radaufstandspunkt abgenommen werden. Zum Anwenden einer in der Radialrichtung des Fahrzeugrads 2, 3 wirkenden konstanten oder unterschiedlich hohen Radialkraft ist eine Radialbelastungseinrichtung 9, die vorliegend als servohydraulischer Zylinder ausgebildet ist, vorgesehen. Weiter ist zum Anwenden einer in der Axialrichtung des Fahrzeugrads 2, 3 wirkenden konstanten oder unterschiedlich hohen Axialkraft eine Axialbelastungseinrichtung 10 vorhanden, die vorliegend ebenfalls als servohydraulischer Zylinder ausgebildet ist.

Schließlich ist eine Trommel 11 vorgesehen, die derart um das Fahrzeugrad 2, 3 herum angeordnet ist, daß das Fahrezugrad 2, 3 über den darauf befindlichen Reifen 1 in Rolleingriff mit der inneren Umfangsoberfläche der Trommel bringbar ist.

Die Trommel 11 besteht aus einer Grundplatte 11a, einem Trommelkörper 11b, einem Deckel 11c und zwei Anlaufringen 11d. In dieser Trommel 11, in der das Fahrzeugrad 2, 3 abrollt, werden die Axialreaktionskraft und Radialreaktionskraft abgenommen. Der Innendurchmesser des Trommelkörpers 11b kann gegenüber dem Reifendurchmesser gleich oder geringfügig größer sein.

Endlich ist eine Einrichtung zum Drehen der Trommel 11 vorgesehen, umfassend eine Antriebswelle 12 zur Befestigung der Trommel 11, Lager 13 zur Lagerung der Antriebswelle 12 und zur Aufnahme der Radial- und Axialreaktionskräfte, einen Antriebsmotor 14 zum Antrieb der Antriebswelle 12 über einen Keilriemenantrieb 15 und damit zum Antrieb der Trommel 11 und des Fahrzeugrads 2, 3 sowie zum Abbremsen der Antriebswelle 12, der Trommel 11 und des Fahrzeugrads 1,2,3 ggf. zusätzlich zu einer Bremsvorrichtung 16, auf die nachstehend näher eingegangen wird.

Zum Erzeugen von Torsionsmomenten an der Drehantriebsverbindung, die in der Fahrpraxis die Drehantriebskraft auf das Fahrzeugrad überträgt und über welche in der Fahrpraxis die Motorbremskräfte auf das Fahrzeugrad übertragen werden, ist die Original-Radnabe 4, vorliegend zusammen mit der Original-Scheibenbremse 17, mittels der üblichen Original-Zentralmutter 18 an der Original-Antriebswelle 19 über ein Gelenk 20, vorliegend ein homokinetisches Gelenk, befestigt und durch das Achsrohr 7 hindurchgeführt. Das Achsrohr 7 kann ebenfalls ein Original-Achsrohr sein, das über Montagezwischenteile 21, 22 drehbar an der Radnabe 4 angebracht ist, wobei die Befestigungsschrauben aus Gründen einer vereinfachten Darstellung nicht gezeigt sind.

Das Achsrohr 7 ist am Belastungsbügel 8 mittels einer Klemmvorrichtung 23 oder einer anderen geeigneten Montagevorrichtung angebracht.

Die gewünschten Torsionsmomente werden mittels der Bremsvorrichtung 16 erzeugt, und zwar vorliegend mittels einer Bremsscheibe 24 derselben, die am freien Ende der Original-Antriebswelle 19, welche bei der Prüfung als Bremswelle fungiert, fest angebracht ist.

Die Bremsvorrichtung 16 ist bevorzugt als Doppelbremse ausgeführt. Die in unterschiedlichen Drehrichtungen wirkenden Antriebs- und Motorbremsmomente werden durch Drehrichtungsumkehr der Trommel 11, welche das Fahrzeugrad 1, 2, 3 antreibt, simuliert.

Anstatt das Fahrzeugrad 1, 2, 3 über den Reifen 1 auf der inneren Umfangsfläche der Trommel abrollen zu lassen, ist es auch möglich, dasselbe über eine Ersatzkonstruktion oder die Felge oder Radschüssel fest mit dem Innenumfang der Trommel 11 zu verbinden. Auf diese Weise kann z.B. die Original-Radnabe und deren Drehantriebsverbindung mit der Antriebs- bzw. Bremswelle 19 für sich allein geprüft werden.

Zur Übertragung der Meßwerte ist ein Schleifring 25 am freien Ende der Antriebs- bzw. Bremswelle 19 vorgesehen, der beispielsweise mit Dehnungsmeßstreifen auf der Antriebs- bzw. Bremswelle 19 zur Messung der simulierten Torsionsmomente verbunden ist.

Es sei darauf hingewiesen, daß in üblicher Weise in den Figuren die senkrechte Kraft mit Fᵥ und die Seitenkraft mit ± Fₕ bezeichnet sind.

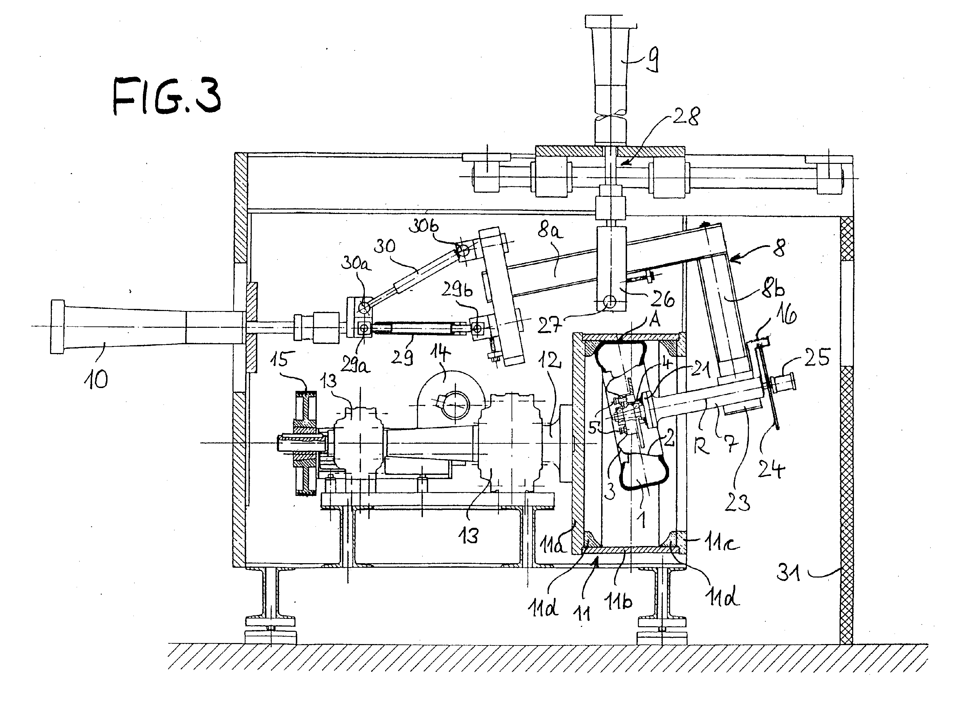

Die Figur 3 zeigt eine praktisch-technische Ausführungsform einer erfindungsgemäßen Einrichtung zum Prüfen der an Fahrzeugrädern angreifenden Drehantriebsverbindung unter betriebsähnlichen Belastungsbedingungen, woraus ersichtlich ist, daß der Belastungsbügel 8 mit dem daran über das Achsrohr 7 und die Antriebs- und/oder Bremswelle 19 angebrachten Fahrzeugrad 1, 2, 3 und der Brems- und/oder Antriebseinrichtung 16 sowie der Meßübertragungseinrichtung 25 verschwenkbar ist. Hierzu ist der Belastungsbügel 8 an einem Halteteil 26 so aufgehängt, daß er um die horizontale Achse 27 verschwenkbar ist (also um eine Achse 27, die senkrecht zur senkrechten Kraft Fᵥ sowie zur Seitenkraft Fₕ bzw. zur Radachse R ist), wobei der Belastungsbügel 8 so austariert ist, daß bei daran angebrachtem Fahrzeugrad 1, 2, 3, Achsrohr 7, Antriebs- und/oder Bremswelle 19, Antriebs- und/oder Bremseinrichtung 16 etc. (also bei versuchsfertigem Aufbau) der horizontale Arm 8a des Belastungsbügels 8 horizontal und der vertikale Arm 8b desselben vertikal ist, wenn keine Kräfte mittels der Radial- und der Axialbelastungseinrichtung 9, 10 ausgeübt werden. Im Prüfbetrieb wird dann durch die kinematischen Verhältnisse der Radaufstandspunkt A zum Drehpunkt, um den sich der Belastungsbügel 8 mit dem Fahrzeugrad 1, 2, 3 etc. (siehe oben) unter dem Einfluß der senkrechten Kraft Fᵥ und der Seitenkraft ± Fₕ verschwenkt. Damit diese Kräfte Fᵥ und ± Fₕ immer im Radaufstandspunkt A angreifen, ist eine Horizontalführung 28 für das Halteteil 26 und die Radialbelastungseinrichtung 9 vorgesehen, die vorliegend als Kugellagerführung ausgebildet ist. Die Axialbelastungseinrichtung 10 ist nach entsprechender Vertikaleinstellung ihrer Position ortsfest angebracht und mittels einer Verbindungsstange 29 gelenkig (Gelenke 29a und 29b) mit dem Belastungsbügel 8 verbunden, zu dem parallel ein Stoßdämpfer 30 ebenfalls gelenkig angebracht ist (Gelenke 30a und 30b). Die gesamte Einrichtung ist mit einem Schallschutz 31 umgeben.

## Patentansprüche

1. Einrichtung zum Prüfen der an Fahrzeugrädern angreifenden Drehantriebsverbindung unter betriebsähnlichen Belastungsbedingungen, umfassend:
(a) eine Halterungseinrichtung (7, 8) zum drehbaren Befestigen eines Fahrzeugrads (2, 3), die eine Radachse (7) umfaßt, welche auf ihrer einen Seite drehfest an einem Träger (8) angebracht und dazu geeignet ist, auf ihrer anderen Seite das Fahrzeugrad (2, 3) über dessen Radlager (6) drehbar zu halten;
(b) eine derart um das Fahrzeugrad (2, 3) herum angeordnete Trommel (11), daß das Fahrzeugrad (2, 3) an der inneren Umfangsoberfläche der Trommel anbringbar ist oder über einen auf dem Fahrzeugrad (2, 3) befindlichen Reifen (2) in Rolleingriff mit der inneren Umfangsoberfläche der Trommel (11) bringbar ist; und
(c) eine Trommeldreheinrichtung (12, 13, 14, 15) zum Drehen der Trommel (11);
dadurch **gekennzeichnet**, daß eine Brems- und/oder Antriebswelle (19) auf ihrer einen Seite drehfest an dem Fahrzeugrad (2, 3) anbringbar und auf ihrer anderen Seite mit einer zum Bremsen oder Antreiben des Fahrzeugrads (2, 3) relativ zu dem Trommeldrehmoment vorgesehenen Brems- und/oder Antriebseinrichtung (16) verbunden ist, wobei die Brems- und/ oder Antriebswelle (19) drehbar durch die Radachse (7) hindurchführbar ist, und wobei die zu prüfende Drehantriebsverbindung die Brems- und/oder Antriebswelle (19) umfaßt oder durch diese mit dem Fahrzeugrad (2, 3) verbindbar oder mit der Brems- und/oder Antriebsvorrichtung (16) verbunden ist, wobei ferner mit der Halterungseinrichtung (7, 8)
(1) eine Radialbelastungseinrichtung (9) zum Aufbringen einer in der Radialrichtung des Fahrzeugrads (2, 3) wirkenden Radialkraft auf die Halterungseinrichtung (7, 8) und/oder
(2) eine Axialbelastungseinrichtung (10) zum Aufbringen einer in der Axialrichtung des Fahrzeugrads (2, 3) wirkenden Axialkraft auf die Halterungseinrichtung (7, 8)
verbunden ist.

2. Einrichtung nach Anspruch 1, dadurch **gekennzeichnet,** daß die durch die Radialbelastungseinrichtung (9) aufbringbare Radialkraft und die durch die Axialbelastungseinrichtung (10) aufbringbare Axialkraft unabhängig voneinander einstellbar sind.

3. Einrichtung nach Anspruch 1 oder 2, dadurch **gekennzeichnet**, daß die Radialbelastungseinrichtung (9) und/oder die Axialbelastungseinrichtung (10) ein servohydraulischer Zylinder ist.

4. Einrichtung nach Anspruch 1, 2 oder 3, dadurch **gekennzeichnet**, daß die Brems- und/oder Antriebswelle (19) eine Original-Antriebswelle eines Kraftfahrzeugs ist.

5. Einrichtung nach einem der Ansprüche 1 bis 4, dadurch **gekennzeichnet**, daß die Radachse (7) eine Original-Kraftfahrzeugachse ist.

6. Einrichtung nach einem der Ansprüche 1 bis 5, dadurch **gekennzeichnet**, daß die Bremsvorrichtung (16) eine Scheibenbremse (24) ist oder umfaßt.

7. Einrichtung nach einem der Ansprüche 1 bis 6, dadurch **gekennzeichnet**, daß die Bremsvorrichtung (16) als in beiden Drehrichtungen wirkende Doppelbremse ausgebildet ist.

8. Einrichtung nach einem oder mehreren der vorhergehenden Ansprüche, dadurch **gekennzeichnet**, daß die Brems- und/oder Antriebswelle (19) über ein Gelenk, insbesondere ein homokinetisches Gelenk (20), mit dem Fahrzeugrad (2, 3) verbindbar ist.

9. Einrichtung nach einem oder mehreren der vorhergehenden Ansprüche, dadurch **gekennzeichnet**, daß auf der inneren Umfangsoberfläche der Trommel (11) wenigstens ein Anlaufring (11d) benachbart dem Reifen (1) und der einen Flanke eines in der Einrichtung anbringbaren Fahrzeugrads (2, 3) angeordnet und auf der dem Reifen (1) zugewandten Seite abgeschrägt ist.

10. Einrichtung nach einem oder mehreren der vorhergehenden Ansprüche, dadurch **gekennzeichnet**, daß benachbart jeder Flanke eines in der Einrichtung anbringbaren Fahrzeugrads (2, 3) je ein auf seiner dem Reifen (1) zugewandten Seite abgeschrägter Anlaufring (11d) vorgesehen ist.

11. Einrichtung nach einem oder mehreren der vorhergehenden Ansprüche, dadurch **gekennzeichnet**, daß der Innendurchmesser der Trommel (11) gleich dem Reifen- oder Raddurchmesser der Trommel (11) gleich dem Reifen- oder Raddurchmesser eines in der Einrichtung anbringbaren Fahrzeugrads (2, 3) oder geringfügig größer als der Reifendurchmesser des unbelasteten Reifens (1) ist.

12. Einrichtung nach einem oder mehreren der vorhergehenden Ansprüche, dadurch **gekennzeichnet**, daß an der Brems- und/oder Antriebswelle (19) eine Meßwertübertragungseinrichtung (25) angebracht ist.

13. Einrichtung nach Anspruch 12, dadurch **gekennzeichnet**, daß die Meßwertübertragungseinrichtung (25) mit einer an der Brems- und/oder Antriebswelle (19) vorgesehenen Torsionsmomentgebereinrichtung verbunden ist.

14. Einrichtung nach Anspruch 12 oder 13, dadurch **gekennzeichnet**, daß die Meßwertübertragungseinrichtung (25) eine Schleifring-Meßwertübertragungseinrichtung ist.

15. Einrichtung nach einem oder mehreren der vorhergehenden Ansprüche, dadurch **gekennzeichnet**, daß die Brems- und/oder Antriebsvorrichtung (16) zum Simulieren betriebsähnlicher Brems-, Beschleunigungs-, Schalt-, Anfahr- und/ oder Stopbelastungen als programmgesteuerte Brems- und/oder Antriebsvorrichtung (16) ausgebildet ist.

16. Einrichtung nach Anspruch 15, dadurch **gekennzeichnet**, daß auch die Trommeldreheinrichtung (14) zum zusammenwirkenden Simulieren betriebsähnlicher Brems-, Beschleunigungs-, Schalt-, Anfahr- und/oder Stopbelastungen mit der Brems- und/oder Antriebseinrichtung (16) als programmgesteuerte Trommeldreheinrichtung (14) ausgebildet ist.

17. Einrichtung nach Anspruch 15 oder 16, dadurch **gekennzeichnet**, daß auch die Radialbelastungseinrichtung (9) und/oder die Axialbelastungseinrichtung (10) zum Simulieren betriebsähnlicher Belastungen, bei denen senkrechte Kräfte (Fᵥ) und/oder Radialkräfte (± Fₕ) auftreten, im Zusammenwirken mit der Brems- und/oder Antriebsvorrichtung (16) und/oder im Zusammenwirken mit der Trommeldreheinrichtung (14) als programmgesteuerte Einrichtung ausgebildet ist.

18. Einrichtung nach einem der Ansprüche 1 bis 17, dadurch **gekennzeichnet**, daß die Halterungseinrichtung (7, 8, 23) für ein in der Einrichtung anbringbares Fahrzeugrad (1, 2, 3) zusammen mit der Brems- und/oder Antriebswelle (19) sowie der Brems- und/oder Antriebseinrichtung (16) verschwenkbar ist.

19. Einrichtung nach Anspruch 18, dadurch **gekennzeichnet**, daß der Belastungsbügel (8) der Halterungseinrichtung (7, 8, 23) um eine zur Richtung der senkrechten Kraft (Fᵥ) und zur Richtung der Seitenkraft (± Fₕ) senkrechte Achse verschwenkbar ist.

## Claims

1. A device whereby the rotary drive connection engaging vehicle wheels is tested under realistic load conditions, the device comprising:
(a) a holder (7, 8) for rotatably securing a vehicle wheel (2, 3) and comprising an axle (7) non-rotatably secured at one end to a support (8) and adapted at its other end to hold the vehicle wheel (2, 3) so as to be rotatable around its wheel bearing (6);
(b) a drum (11) disposed around the vehicle wheel (2, 3) so that the wheel (2, 3) can be attached to the inner peripheral surface of the drum or can be brought into rolling engagement with the inner peripheral surface of the drum (11) via a tyre (2) on the wheel (2, 3) and
(c) a drum-rotating device (12, 13, 14, 15) for rotating the drum (11);
characterised in that one end of a brake and/or drive shaft (19) is non-rotatably attachable to the vehicle wheel (2, 3) and the other end of the shaft is connected to a brake and/or drive device (16) for braking or driving the vehicle wheel (2, 3) relative to the drum torque, the brake and/or drive shaft (19) being rotatably extendable through the axle (7), and the rotary drive connection under test comprises the brake and/or drive shaft (19) or can be connected thereby to the vehicle wheel (2, 3) or is connected to the brake and/or drive device (16), and also the holder (7, 8) is connected to
(1) a radial loading device (9) whereby a radial force operative in the radial direction of the wheel (2, 3) is applied to the holder (7, 8) and/or
(2) an axial loading device (10) whereby an axial force operative in the axial direction of the wheel (2, 3) is applied to the holder (7, 8).

2. A device according to claim 1, characterised in that the radial force applied by the radial loading device (9) and the axial force applied by the axial loading device (10) are independently adjustable.

3. A device according to claim 1 or 2, characterised in that the radial loading device (9) and/or the axial loading device (10) is a servohydraulic cylinder.

4. A device according to claim 1, 2 or 3, characterised in that the brake and/or drive shaft (19) is an original drive shaft of a motor vehicle.

5. A device according to any of claims 1 to 4, characterised in that the wheel axle (7) is an original vehicle axle.

6. A device according to any of claims 1 to 5, characterised in that the brake device (16) is or comprises a disc brake (24).

7. A device according to any of claims 1 to 6, characterised in that the brake device (16) is a double brake operative in both directions of rotation.

8. A device according to one or more of the preceding claims, characterised in that the brake and/or drive shaft (19) is connectable to the vehicle wheel (2, 3) via a joint, more particularly a synchronised joint (20).

9. A device according to one or more of the preceding claims, characterised in that at least one thrust ring (11d) is disposed on the inner peripheral surface of the drum (11) adjacent the tyre (1) and one flank of a vehicle wheel (2, 3) for attaching to the device, and is bevelled on the side facing the tyre (1).

10. A device according to one or more of the preceding claims, characterised in that a first ring (lld) bevelled on the side facing the tyre (1) is provided adjacent each flank of a vehicle wheel (2, 3) for attaching to the device.

11. A device according to one or more of the preceding claims, characterised in that the inner diameter of the drum (11) is equal to the diameter of the tyre or wheel (2, 3) for attaching to the device, or is slightly greater than the diameter of the tyre (1) when unloaded.

12. A device according to one or more of the preceding claims, characterised in that a measurement transmitter (25) is attached to the brake and/or drive shaft (19).

13. A device according to claim 12, characterised in that the measurement transmitter (25) is connected to a torsional moment pick-up on the brake and/or drive shaft (19).

14. A device according to claim 12 or 13, characterised in that the measurement transmitter (25) is a slip-ring measurement transmitter.

15. A device according to one or more of the preceding claims, characterised in that the brake and/or drive device (16) is program-controlled and adapted to simulate realistic braking, accelerating, gear-changing, starting and/or stopping loads.

16. A device according to claim 15, characterised in that the drum-rotating device (14) is also program-controlled for simulating realistic braking, accelerating, gear-changing, starting and/or stopping loads in co-operation with the brake and/or drive device (16).

17. A device according to claim 15 or 16, characterised in that the radial loading device (9) and/or the axial loading device (10) are program-controlled in co-operation with the brake and/or drive device (16) and/or in co-operation with the drum-rotating device (14) for simulating realistic loads in which vertical forces (Fᵥ) and/or radial forces (± Fₕ)occur.

18. A device according to any of claims 1 to 17, characterised in that the holder (7, 8, 23) for a vehicle wheel (1, 2, 3) attached to the device is pivotable together with the brake and/or drive shaft (19) and with the brake and/or drive device (16).

19. A device according to claim 18, characterised in that the bent loading member (8) of the holder (7, 8, 9) is pivotable around an axis perpendicular to the direction of the vertical force (Fᵥ) and to the direction of the side force (± Fₕ).

## Revendications

1. Dispositif pour contrôler la liaison d'entraînement en rotation, qui est appliquée aux roues d'un véhicule, dans des conditions de charge analogues au fonctionnement, comprenant
(a) un dispositif de retenue (7,8) pour fixer, de manière qu'elle puisse tourner, une roue (2,3) du véhicule, qui comprend un essieu (7), qui, sur l'un de ses côtés, est monté avec blocage en rotation sur un support (8) et convient pour retenir, sur son autre côté, la roue (2,3) du véhicule de manière qu'elle puisse tourner au moyen de son roulement de roue (6);
(b) un tambour (11), disposé autour de la roue (2,3) du véhicule, de telle sorte que la roue (2,3) du véhicule peut être montée sur la surface circonférentielle intérieure du tambour ou peut être amenée, au moyen d'un pneumatique (2) situé sur la roue (2,3) du véhicule, à s'appliquer en roulant contre la surface circonférentielle intérieure du tambour (11); et
(c) un dispositif (12,13,14,15) d'entraînement en rotation du tambour pour faire tourner le tambour (11);
caractérisé en ce qu'un arbre de frein et/ou un arbre d'entraînement (19) peut être monté, par l'un de ses côtés, avec blocage en rotation sur la roue (2,3) du véhicule et est relié, sur son autre côté, à un dispositif de freinage et/ou d'entraînement (16), prévu pour le freinage ou l'entraînement de la roue (2,3) du véhicule par rapport au couple du tambour, l'arbre de frein et/ou l'arbre d'entraînement (19) traversant, de manière à pouvoir tourner, l'essieu (7), tandis que la liaison d'entraînement en rotation, qui doit être contrôlée, entoure l'arbre de frein et/ou l'arbre d'entraînement (19) ou peut être relié par ce dernier à la roue (2,3) du véhicule ou est relié au dispositif de frein et/ou d'entraînement (16), et qu'en outre au dispositif de retenue (7,8) sont reliés
(1) un dispositif de charge radiale (9) servant à appliquer une force radiale, qui agit dans la direction radiale de la roue (2,3) du véhicule, au dispositif de retenue (7,8) et/ou
(2) un dispositif de charge axiale (10) pour appliquer une force axiale, qui agit dans la direction axiale (2,3) du véhicule, au dispositif de retenue (7,8).

2. Dispositif selon la revendication 1, caractérisé en ce que la force radiale, qui peut être appliquée par le dispositif de charge radiale (9), et la force axiale, qui peut être appliquée par le dispositif de charge axiale (10), sont réglables indépendamment l'une de l'autre.

3. Dispositif selon la revendication 1, caractérisé en ce que le dispositif de charge radiale (9) et/ou le dispositif de charge axiale (10) est un vérin servo-hydraulique.

4. Dispositif selon la revendication 1, 2 ou 3, caractérisé en ce que l'arbre de frein et/ou l'arbre d'entraînement (19) est un arbre d'entraînement d'origine d'un véhicule automobile.

5. Dispositif selon l'une des revendications 1 à 4, caractérisé en ce que l'essieu (7) est un essieu d'origine du véhicule automobile.

6. Dispositif selon l'une des revendications 1 à 5, caractérisé en ce que le dispositif de frein (16) est ou comprend un frein à disque (24).

7. Dispositif selon l'une des revendications 1 à 6, caractérisé en ce que le dispositif de frein (16) est agencé sous la forme d'un frein double agissant dans les deux sens de rotation.

8. Dispositif selon une ou plusieurs des revendications précédentes, caractérisé en ce que l'arbre de frein et/ou l'arbre d'entraînement (19) peuvent être reliés par l'intermédiaire d'une articulation, notamment d'une articulation homocinétique (20), à la roue (2,3) du véhicule.

9. Dispositif selon une ou plusieurs des revendications précédentes, caractérisé en ce qu'au moins une bague de démarrage (11d) est disposée, sur la surface circonférentielle intérieure du tambour (11), au voisinage du pneumatique (1) et d'un flanc d'une roue (2,3) du véhicule, qui peut être monté dans le dispositif, et est biseauté sur le côté tourné vers le pneumatique (1).

10. Dispositif selon une ou plusieurs des revendications précédentes, caractérisé en ce qu'au voisinage de chaque plan d'une roue (2,3) du véhicule, qui peut être montée dans le dispositif, est prévu respectivement une bague de démarrage (11d) qui est biseautée sur son côté tourné vers le pneumatique (1).

11. Dispositif selon une ou plusieurs des revendications précédentes, caractérisé en ce que le diamètre intérieur du tambour (11) est égal au diamètre du pneumatique ou de la roue (2,3) du véhicule pouvant être monté dans le dispositif ou est légèrement supérieur du diamètre du pneumatique non chargé (1).

12. Dispositif selon une ou plusieurs des revendications précédentes, caractérisé en ce qu'un dispositif (25) de contrôle de la valeur de mesure est monté sur l'arbre de frein et/ou l'arbre d'entraînement (19).

13. Dispositif selon la revendication 12, caractérisé en ce que le dispositif (25) de transmission de la valeur de mesure est relié à un dispositif de transmission du moment de torsion, prévu sur l'arbre de frein et/ou sur l'arbre d'entraînement (19).

14. Dispositif selon la revendication 12 ou 13, caractérisé en ce que le dispositif (25) de transmission de la valeur de mesure est un dispositif de transmission de la valeur de mesure à bague coulissante.

15. Dispositif selon une ou plusieurs des revendications précédentes, caractérisé en ce que le dispositif de frein et/ou le dispositif d'entraînement (16) servant à simuler des charges, analogues à celles du fonctionnement, de freinage, d'accélération, de commutation et de démarrage et/ou d'arrêt, est agencé sous la forme d'un dispositif de frein et/ou d'un dispositif d'entraînement (16) commandé par programme.

16. Dispositif selon la revendication 15, caractérisé en ce que le dispositif (14) d'entraînement en rotation du tambour servant à simuler, en coopération, des charges, analogues au fonctionnement, de freinage, d'accélération, de commutation et de démarrage et/ou d'arrêt avec le dispositif de frein et/ou le dispositif d'entraînement (16) est agencé également sous la forme d'un dispositif (14) d'entraînement en rotation du tambour, commandé par programme.

17. Dispositif selon la revendication 15 ou 16, caractérisé en ce que le dispositif de charge radiale (9) et/ou le dispositif de charge axiale (10) pour la simulation de charges, qui sont analogues aux conditions de fonctionnement et pour lesquelles apparaissent des forces verticales (Fᵥ) et/ou des forces radiales (±Fₕ) est agencé, en coopération avec le dispositif de frein et/ou le dispositif d'entraînement (16) et/ou en coopération avec le dispositif (14) d'entraînement en rotation du tambour, sous la forme d'un dispositif commandé par programme.

18. Dispositif selon l'une des revendications 1 à 17, caractérisé en ce que le dispositif de retenue (7,8,23) pour une roue (1,2,3) de véhicule, pouvant être montée dans le dispositif, peut basculer, conjointement avec l'arbre de frein et/ou un arbre d'entraînement (19) ainsi que le dispositif de frein et/ou le dispositif d'entraînement (16).

19. Dispositif selon la revendication 18, caractérisé en ce que l'étrier de charge (8) du dispositif de retenue (7,8,23) peut basculer autour d'un axe qui est perpendiculaire à la direction de la force verticale (Fᵥ) et à la direction de la force latérale (±Fₕ).
